# EUROPEAN PATENT APPLICATION

(11) **EP 4 296 776 A1**
(43) Date of publication of application: **27.12.2023**
(21) Application number: 23180104.4
(22) Date of filing: 19.06.2023
(51) Int. Cl.: G03B 21/20, H04N 9/31, G03B 21/26

(54) **INFRARED LIGHT SOURCE MODULE AND PROJECTION DEVICE**

(30) Priority: 22.06.2022 CN 202210711994
(71) Applicant: Coretronic Corporation, Hsin-Chu 300 (TW)
(72) Inventor: KUO, PEN-NING, 300 Hsin-Chu (TW); HO, WEN-CHING, 300 Hsin-Chu (TW)
(74) Representative: Ter Meer Steinmeister & Partner

(57) **Abstract**

An infrared (IR) light source module for providing an IR light beam includes at least one circuit substrate, first IR light-emitting elements, and second IR light-emitting elements. The first IR light-emitting elements are disposed on the at least one circuit substrate. The first IR light-emitting elements are used to provide a first light beam. The second IR light-emitting elements are disposed on the at least one circuit substrate. The second IR light-emitting elements are used to provide a second light beam. The IR light beam includes at least one of a first light beam and a second light beam, wherein a wavelength of the first light beam is greater than or equal to 700 nm and less than or equal to 780 nm, and a wavelength of the second light beam is greater than 780 nm and less than or equal to 1000 nm.

## Description

### Field of the Invention

The invention relates to a light-emitting module and an electronic device, and in particular, to an infrared light source module and a projection device.

### Description of Related Art

The use of simulated projectors in military or special fields requires invisible light applications. At present, the applications of invisible light sources for simulated projectors include infrared (IR) laser diodes and IR light-emitting diodes (LED) as the mainstream. In particular, the advantages of IR laser diodes are high collimation of laser light, high power, and good optical light-receiving efficiency, but the disadvantage is that the price is relatively high. On the contrary, the price of IR LEDs is cheap, but the collimation is poor, the power is low, and the optical light-receiving efficiency is poor. Therefore, both have their pros and cons.

The current trend in the industry for the IR wavelength of the invisible light source used by simulated projectors is 740 nm. Because the wavelength of IR light (740 nm) used by simulated projectors is close to the wavelength of visible light, the transmittance is better, and there is no ghosting issue, and therefore the projection lens does not need to be particularly optimized for IR. In the application of IR light with a wavelength of 808 nm, although the brightness of the image projected by the projector may be improved, the projection lens needs to be specially treated with IR optimized coating. However, projection lenses treated with IR optimized coating are expensive and may not be shared with general projection lenses, resulting in the issues of material diversity, high cost, and complicated production and procurement management.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the invention was acknowledged by a person of ordinary skill in the art.

### SUMMARY OF THE INVENTION

The invention provides an infrared (IR) light source module and a projection device that may selectively turn on IR light of different wavelengths in different situations to match different projection modes, thereby improving good optical effects.

Other objects and advantages of the invention may be further understood from the technical features disclosed in the invention.

The object is solved by the features of the independent claims. Preferred embodiments are given in the dependent claims.

In order to achieve one or part or all of the above objects or other objects, the invention provides an IR light source module for providing an IR light beam, including at least one circuit substrate, a plurality of first IR light-emitting elements, and a plurality of second IR light-emitting elements. The plurality of first IR light-emitting elements are disposed on the at least one circuit substrate. The plurality of first IR light-emitting elements are used to provide a first light beam. The plurality of second IR light-emitting elements are disposed on the at least one circuit substrate. The plurality of second IR light-emitting elements are used to provide a second light beam. The IR light beam includes at least one of a first light beam and a second light beam, wherein a wavelength of the first light beam is greater than or equal to 700 nm and less than or equal to 780 nm, and a wavelength of the second light beam is greater than 780 nm and less than or equal to 1000 nm.

In one or more embodiments, a number of the at least one circuit substrate may be two.

In one or more embodiments, the plurality of first IR light-emitting elements may be disposed in one of the at least one circuit substrate.

In one or more embodiments, the plurality of second IR light-emitting elements may be disposed in the other one of the at least one circuit substrate.

In one or more embodiments, the plurality of first IR light-emitting elements may be IR light-emitting diodes or IR laser diodes.

In one or more embodiments, the plurality of second IR light-emitting elements may be IR laser diodes or IR light-emitting diodes.

In one or more embodiments, a wavelength of the first light beam may be 730 nm or 740 nm.

In one or more embodiments, a wavelength of the second light beam may be 808 nm.

In one or more embodiments, the plurality of first IR light-emitting elements and the plurality of second IR light-emitting elements may be alternately arranged on the at least one circuit substrate.

In one or more embodiments, a number of the plurality of first IR light-emitting elements may be greater than or equal to a number of the plurality of second IR light-emitting elements.

In one or more embodiments, the IR light source module may further comprise a plurality of first collimating lenses and a plurality of second collimating lenses.

In one or more embodiments, the first collimating lenses may be disposed on a light-emitting side of the plurality of first IR light-emitting elements.

In one or more embodiments, the plurality of second collimating lenses may be disposed on a light-emitting side of the plurality of second IR light-emitting elements.

In one or more embodiments, optical conditions of the plurality of first collimating lenses may be different from optical conditions of the plurality of second collimating lenses.

In order to achieve one or part or all of the above objects or other objects, the invention further provides a projection device including an illumination system, at least one light valve, and a projection lens. The illumination system is used for providing at least one of an illumination light beam and an IR light beam. The illumination system includes a visible light source module and an IR light source module. The visible light source module is used for providing the illumination light beam. The IR light source module is used for providing the IR light beam. The IR light source module includes at least one circuit substrate, a plurality of first IR light-emitting elements, and a plurality of second IR light-emitting elements. The plurality of first IR light-emitting elements are disposed on the at least one circuit substrate. The plurality of first IR light-emitting elements are used to provide a first light beam. The plurality of second IR light-emitting elements are disposed on the at least one circuit substrate. The plurality of second IR light-emitting elements are used to provide a second light beam. The IR light beam includes at least one of the first light beam and the second light beam. The at least one light valve is disposed on a transmission path of the illumination light beam and the IR light beam, and is used for converting the illumination light beam into a visible image light beam and converting the IR light beam into an IR image light beam. The projection lens is disposed on the transmission path of the visible image light beam and the IR image light beam, and is used for projecting at least one of the visible image light beam and the IR image light beam out of the projection device, wherein a wavelength of the first light beam is greater than or equal to 700 nm and less than or equal to 780 nm, and a wavelength of the second light beam is greater than or equal to 780 nm and less than or equal to 1000 nm.

In one or more embodiments, the illumination system may further comprise a focusing element disposed on a transmission path of the first light beam and the second light beam.

In one or more embodiments, the illumination system may further comprises a light splitting element.

In one or more embodiments, the light splitting element may be disposed on the transmission path of the illumination light beam and the IR light beam for reflecting at least one of the illumination light beam and the IR light beam and allowing the other one of the illumination light beam and the IR light beam to pass through.

In one or more embodiments, the light splitting element may be used for reflecting one of the first light beam and the second light beam and allowing the other one of the first light beam and the second light beam to pass through.

In one or more embodiments, the illumination system may further comprise a light homogenizing element disposed on the transmission path of the illumination light beam and the IR light beam.

In one or more embodiments, the visible light source module and the IR light source module may be turned on and off in an alternating sequence.

In one or more embodiments, a turn-on time interval of the visible light source module may be equal to a turn-on time interval of the IR light source module.

In one or more embodiments, the projection device may further comprise a processing element electrically connected to the visible light source module and the IR light source module, and may be used for controlling a luminous intensity of the illumination light beam and the IR light beam.

In one or more embodiments, the projection device may have a first night vision mode and a second night vision mode

In one or more embodiments, in the first night vision mode, the processing element may turn on the plurality of first IR light-emitting elements and may turn off the plurality of second IR light-emitting elements

In one or more embodiments, in the second night vision mode, the processing element may turn on the plurality of first IR light-emitting elements and the plurality of second IR light-emitting elements.

In one or more embodiments, the projection device may have a first correction mode and a second correction mode

In one or more embodiments, in the first correction mode, the processing element may turn on the visible light source module, the plurality of first IR light-emitting elements, and the plurality of second IR light-emitting elements.

In one or more embodiments, in the second correction mode, the processing element may turn on the visible light source module and the plurality of second IR light-emitting elements, and may turn off the plurality of first IR light-emitting elements.

In one or more embodiments, the projection device may further comprise a sensing element electrically connected to the processing element

In one or more embodiments, the sensing element may receive at least one of the visible image light beam reflected by a projection target and the IR image light beam to obtain a sensing result.

In one or more embodiments, the processing element may turn on or off the plurality of first IR light-emitting elements according to the sensing result.

In one or more embodiments, the plurality of first IR light-emitting elements and the plurality of second IR light-emitting elements of the IR light source module may be alternately arranged on the at least one circuit substrate.

In one or more embodiments, the visible light source module may comprise a red laser diode, a green laser diode, and a blue laser diode.

Based on the above, the embodiments of the invention have at least one of the following advantages or efficacies. In the IR light source module and the projection device of the invention, the IR light source module includes the at least one circuit substrate, the plurality of first IR light-emitting elements, and the plurality of second IR light-emitting elements used to provide the first light beam and the second light beam with different wavelengths. In particular, the wavelength of the first light beam is greater than or equal to 700 nm and less than or equal to 780 nm, and the wavelength of the second light beam is greater than 780 nm and less than or equal to 1000 nm. In this way, IR light of different wavelengths may be selectively turned on in different situations to match different projection modes, thereby improving the good optical effect.

Other objectives, features and advantages of the invention will be further understood from the further technological features disclosed by the embodiments of the invention wherein there are shown and described preferred embodiments of this invention, simply by way of illustration of modes best suited to carry out the invention.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a schematic diagram of a projection device of an embodiment of the invention.
FIG. 2 is another schematic diagram of the projection device of FIG. 1.
FIG. 3 is a schematic diagram of an IR light source module of an embodiment of the invention.
FIG. 4 is a schematic diagram of an illumination system of an embodiment of the invention.
FIG. 5 is a schematic diagram of an illumination system of another embodiment of the invention.
FIG. 6 is a schematic diagram of a projection device providing a light beam in sequence of an embodiment of the invention.

### DESCRIPTION OF THE EMBODIMENTS

In the following detailed description of the preferred embodiments, reference is made to the accompanying drawings which form a part hereof, and in which are shown by way of illustration specific embodiments in which the invention may be practiced. In this regard, directional terminology, such as "top," "bottom," "front," "back," etc., is used with reference to the orientation of the Figure(s) being described. The components of the invention can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the invention. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

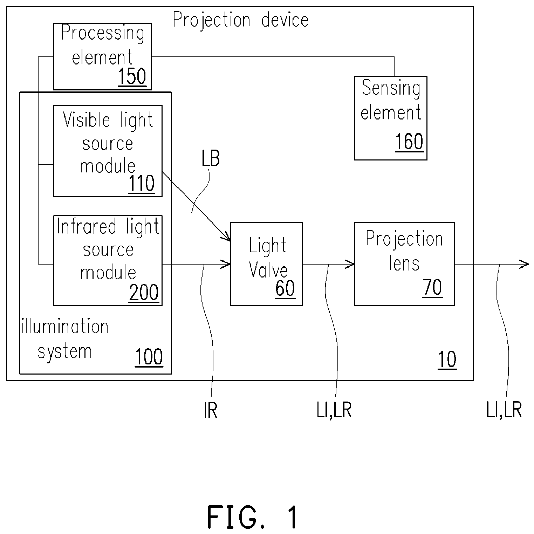

FIG. 1 is a schematic diagram of a projection device of an embodiment of the invention. Please refer to FIG. 1. The embodiment provides a projection device 10 including an illumination system 100, at least one light valve 60, and a projection lens 70. In particular, the illumination system 100 is used to provide an illumination light beam LB and an infrared (IR) light beam IR. The at least one light valve 60 is disposed on the transmission path of the illumination light beam LB and the IR light beam IR, and is used for converting the illumination light beam LB into a visible image light beam L1 and converting the IR light beam IR into an IR image light beam LR. The projection lens 70 is disposed on the transmission path of the visible image light beam LI and the IR image light beam LR, and is used to project at least one of the visible image light beam LI and the IR image light beam LR out of the projection device 10 to a projection target (not shown), and the projection target is, for example, a screen or a wall.

In the embodiment, the light valve 60 is, for example, a reflective light modulator such as a liquid crystal on silicon panel (LCoS panel) or a digital micro-mirror device (DMD). In some embodiments, the light valve 60 may also be a transmissive light modulator such as a transparent liquid-crystal panel, an electro-optical modulator, a magneto-optic modulator, or an acousto-optic modulator (AOM). The invention does not limit the configuration and the type of the light valve 60. Regarding the method for the light valve 60 to convert the illumination light beam LB into the visible image light beam LI and the IR light beam IR into the IR image light beam LR, the detailed steps and implementations thereof may be adequately taught, suggested, and implemented by general knowledge in the art, and are therefore not repeated herein. In the embodiment, the number of the light valve 60 is one, for example, the projection device 10 using a single digital micro-mirror element, but in other embodiments, there may be a plurality, and the invention is not limited thereto.

The projection lens 70 includes, for example, a combination of one or a plurality of optical lenses having a diopter, including, for example, various combinations of a non-planar lens such as a biconcave lens, a lenticular lens, a concave-convex lens, a convex-concave lens, a plano-convex lens, a plano-concave lens, and the like. In an embodiment, the projection lens 70 may further include a flat optical lens projecting at least one of the visible image light beam LI and the IR image light beam LR from the light valve 60 to a projection target in a reflective manner. The invention does not limit the configuration and the type of the projection lens 70.

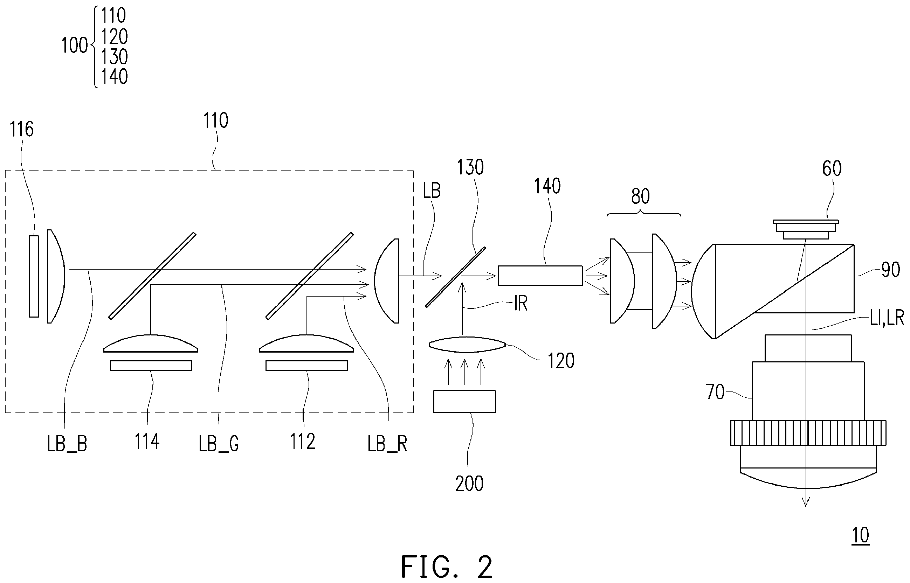

FIG. 2 is another schematic diagram of the projection device of FIG. 1. Please refer to FIG. 1 and FIG. 2. In the embodiment, the illumination system 100 includes a visible light source module 110 and an IR light source module 200. The visible light source module 110 is used for providing the illumination light beam LB, and the IR light source module 200 is used for providing the IR light beam IR. For example, in the embodiment, the visible light source module 110 includes a red laser diode 112, a green laser diode 114, and a blue laser diode 116 respectively providing a red light beam LB_R, a green light beam LB_G, and a blue light beam LB_B to form the illumination light beam LB. Specifically, the visible light source module 110 also includes a plurality of optical elements such as light splitting and combining elements, focusing lenses, etc. The invention does not limit the type or shape of the visible light source module 110. The detailed structure and implementation thereof may be adequately taught, suggested, and implemented from common knowledge in the art, and thus are not repeated herein.

In the embodiment, the illumination system 100 further includes a focusing element 120, a light splitting element 130, and a light homogenizing element 140. The focusing element 120 is, for example, a focusing lens disposed on the transmission path of the IR light beam IR, and is used for optically focusing the IR light beam IR. The light splitting element 130 is disposed on the transmission path of the illumination light beam LB and the IR light beam IR for reflecting at least one of the illumination light beam LB and the IR light beam IR and allowing the other one of the illumination light beam LB and the IR light beam IR to pass through. In the embodiment, the light splitting element 130 is, for example, an IR light splitter used to reflect the IR light beam IR and allow the illumination light beam LB to pass through. In particular, in the embodiment, the focusing lens 120 is, for example, located between the IR light source module 200 and the light splitting element 130, and the light splitting element 130 is, for example, located between the visible light source module 110 and the light homogenizing element 140.

The light homogenizing element 140 is disposed on the transmission path of the illumination light beam LB and the IR light beam IR and located between the light splitting element 130 and the light valve 80, and is used for adjusting the shape of the light spot of the illumination light beam LB and/or the IR light beam IR, so that the shape of the light spot of the illumination light beam LB and/or the IR light beam IR may match the shape of the effective imaging area of the light valve 60 (for example, a rectangle), and the light spot may have consistent or similar light intensity everywhere, and the light intensity of the illumination light beam LB and/or the IR light beam IR is uniform. In the embodiment, the light homogenizing element 140 is, for example, an integral column, but in other embodiments, the light homogenizing element 140 may also be an optical element of other suitable types, such as a lens array (fly eye lens array), but the invention is not limited thereto.

In the embodiment, the projection device 10 may optionally include a collimating lens group 80 and a total reflection prism 90, for example, disposed on the transmission path of the illumination light beam LB and/or the IR light beam IR from the light homogenizing element 140. The collimating lens group 80 is, for example, a combination of a plurality of optical lenses for collimating the illumination light beam LB and the IR light beam IR. The total reflection prism 90 is, for example, a total internal reflection prism (TIR prism or RTIR prism) used to guide the illumination light beam LB and/or the IR light beam IR to transmit to the light valve 60 and to guide the visible image light beam LI and the IR image light beam LR to the projection lens 70. However, the invention does not limit the type or form of the projection device 10, and the detailed structure and implementation thereof may be adequately taught, suggested, and implemented by common knowledge in the art, and thus are not repeated herein.

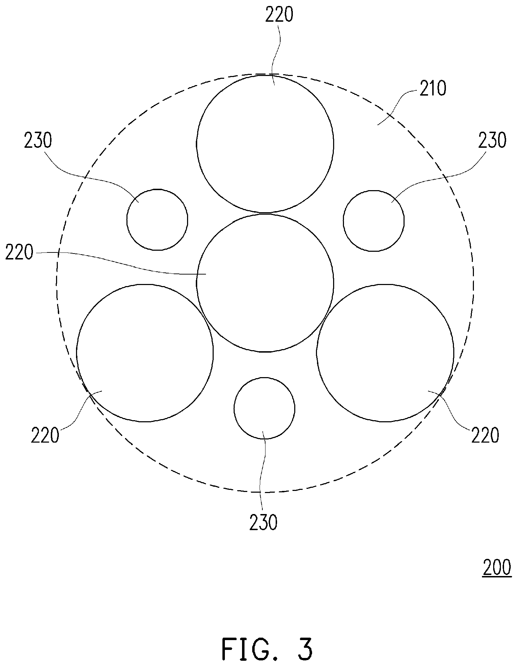

FIG. 3 is a schematic diagram of an IR light source module of an embodiment of the invention. An IR light source module 200 shown in FIG. 3 may at least be applied to the projection device 10 of FIG. 2, and therefore the following description is given by taking the application to the projection device 10 of FIG. 2 as an example. Please refer to FIG. 2 and FIG. 3. The IR light source module 200 includes at least one circuit substrate 210, a plurality of first IR light-emitting elements 220, and a plurality of second IR light-emitting elements 230. The plurality of first IR light-emitting elements 220 are disposed on the circuit substrate 210 to provide a first light beam L1, and the plurality of second IR light-emitting elements 230 are disposed on the circuit substrate 210 to provide a second light beam L2. The IR light beam IR emitted by the IR light source module 200 includes at least one of the first light beam L1 and the second light beam L2, the focusing element 120 is disposed on the transmission path of the first light beam L1 and the second light beam L2, and is used for optically focusing at least one of the first light beam L1 and the second light beam L2. For example, in the embodiment, the number of the circuit substrate 210 is one, and the plurality of first IR light-emitting elements 220 and the plurality of second IR light-emitting elements 230 are alternately arranged on the circuit substrate 210. In the embodiment, the number of the plurality of first IR light-emitting elements 220 is greater than the number of the plurality of second IR light-emitting elements 230. However, in different embodiments, the number of the plurality of first IR light-emitting elements 220 may be designed to be equal to or less than the number of the plurality of second IR light-emitting elements 230, and the invention is not limited thereto. However, in other embodiments, the number of the circuit substrate 210 may be designed to be two, the plurality of first IR light-emitting elements 220 are disposed on one of the circuit substrates 210, and the plurality of second IR light-emitting elements 230 are disposed on the other circuit substrate 210. Moreover, in the embodiment above, the light splitting element 130 is used for reflecting one of the first light beam L1 and the second light beam L2 and allowing the other one of the first light beam L1 and the second light beam L2 to pass through, but the invention is not limited thereto.

The plurality of first IR light-emitting elements 220 may be, for example, IR light-emitting diodes or IR laser diodes, and the plurality of second IR light-emitting elements 230 may be IR laser diodes or IR light-emitting diodes, but the invention is not limited thereto. In particular, the wavelength of the first light beam L1 is greater than or equal to 700 nm and less than or equal to 780 nm, and the wavelength of the second light beam L2 is greater than 780 nm and less than or equal to 1000 nm. It is worth mentioning that the first light beam L1 and the second light beam L2 may have different characteristics according to different types of configurations.

For example, in the embodiment, the plurality of first IR light-emitting elements 220 adopt IR light-emitting diodes with a wavelength of 730 nm to 740 nm. However, in different embodiments, the plurality of first IR light-emitting elements 220 may be reconfigured as IR laser diodes, and the invention is not limited thereto. Moreover, the plurality of second IR light-emitting elements 230 are IR laser diodes with a wavelength of 808 nm. However, in different embodiments, the plurality of first IR light-emitting elements 220 may also be reconfigured as IR light-emitting diodes, and the invention is not limited thereto. In this way, IR light beams with different wavelengths may be turned on selectively or at the same time in different situations to match different projection modes, thereby enhancing good optical effects.

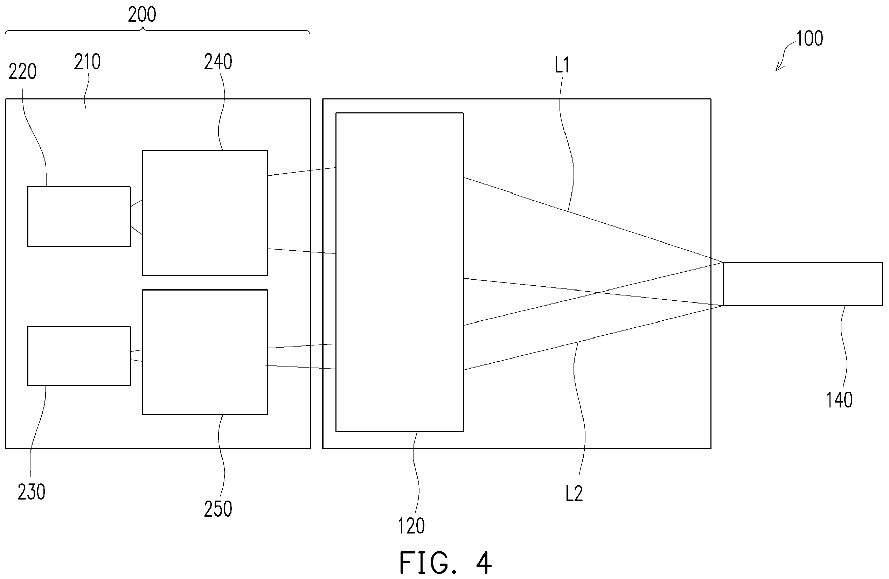

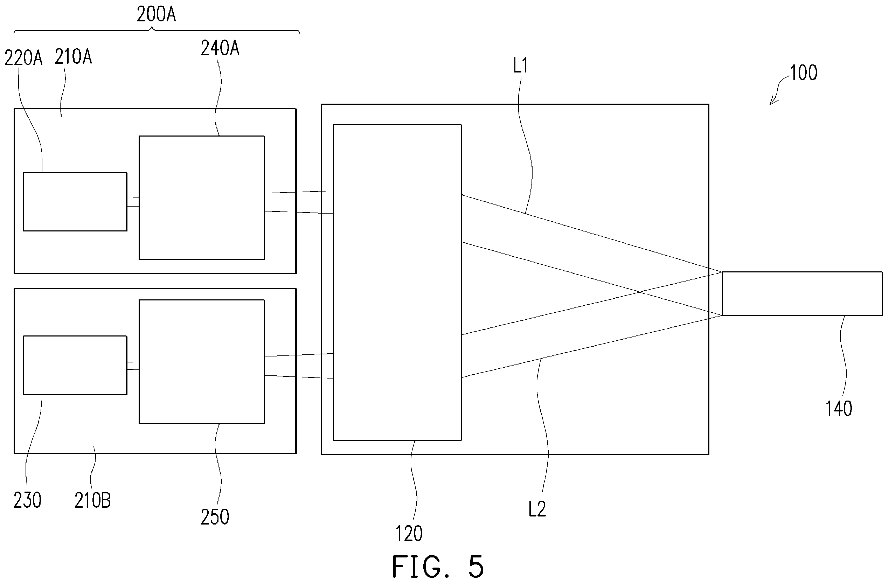

FIG. 4 is a schematic diagram of an illumination system of an embodiment of the invention. FIG. 5 is a schematic diagram of an illumination system of another embodiment of the invention. For the convenience of description, FIG. 4 and FIG. 5 simply illustrate the positions of elements, and do not limit the actual arrangement positions and numbers. Please refer to FIG. 4 and FIG. 5. In the illumination system 100 of FIG. 4, the plurality of first IR light-emitting elements 220 and the plurality of second IR light-emitting elements 230 are disposed on the same circuit substrate 210, and the IR light source module 200 further includes a plurality of first collimating lenses 240 and a plurality of second collimating lenses 250, the plurality of first collimating lenses 240 respectively correspond to the plurality of first IR light-emitting elements 220, and the plurality of second collimating lenses 250 respectively correspond to the plurality of second IR light-emitting elements 230. In particular, the plurality of first collimating lenses 240 are, for example, LED collimating lenses disposed on the light-emitting side of the plurality of first IR light-emitting elements 220, and the plurality of second collimating lenses 250 are, for example, laser diode collimating lenses disposed on the light-emitting side of the plurality of second IR light-emitting elements 230. Therefore, the optical conditions of the plurality of first collimating lenses 240 are different from the optical conditions of the plurality of second collimating lenses 250. In the illumination system 100 of FIG. 5, the plurality of first IR light-emitting elements 220 and the plurality of second IR light-emitting elements 230 of an IR light source module 200A are respectively disposed on different circuit substrates 210A and 210B, the plurality of first IR light-emitting elements 220A are replaced by IR laser diodes, and the plurality of first collimating lenses 240A are replaced by laser diode collimating lenses. In other words, in the different IR light source modules 200 and 200A, corresponding collimating lenses may be respectively disposed according to the difference of light exit angles of different IR LEDs, so that the IR light may be collimated, and the light may be combined by focusing through the same piece of focusing element 120. In this way, the device volume and manufacturing cost may be further reduced.

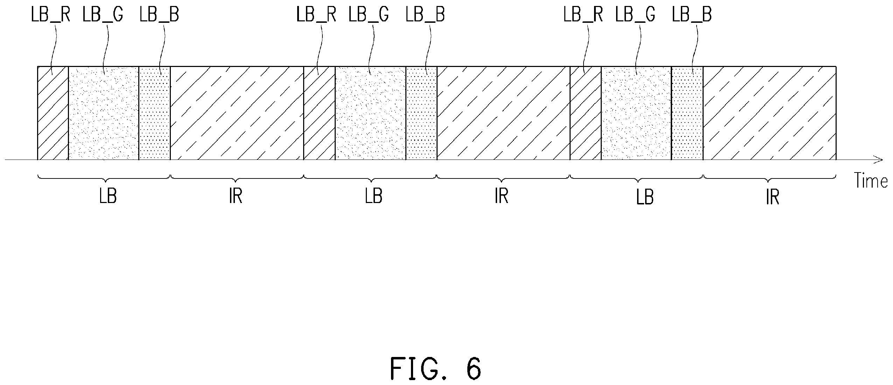

FIG. 6 is a schematic diagram of a projection device providing a light beam in sequence of an embodiment of the invention. Please refer to FIG. 2 and FIG. 6. The schematic diagram of providing a light beam in sequence shown in FIG. 6 may be applied to the projection device 10 shown in FIG. 2, and therefore the following description takes the projection device 10 shown in FIG. 2 as an example. In the embodiment, the visible light source module 110 and the IR light source module 200 are alternately turned on and off in sequence to sequentially generate the illumination light beam LB (sequentially generate the red light beam LB_R, the green light beam LB_G, and the blue light beam LB_B) and the IR light beam IR. Specifically, the turn-on time interval of the visible light source module 110 is equal to the turn-on time interval of the IR light source module 200, and the time interval is, for example, the time length of one image frame. In this way, the issue of screen flicker may be alleviated by sequentially generating the illumination light beam LB and the IR light beam IR.

Please refer further to FIG. 1, FIG. 2, and FIG. 3. In the embodiment, since the projection device 10 is equipped with two IR light beams with different characteristics, the projection device 10 may be further applied in different situations by controlling the luminous intensity of the illumination light beam LB and the IR light beam IR, such as applied to night vision modes of different sizes, or applied to image screen correction of different optical qualities. Specifically, the projection device 10 further includes a processing element 150 electrically connected to the visible light source module 110 and the IR light source module 200 for controlling the luminous intensity of the illumination light beam LB and the IR light beam IR. The processing element is, for example, a central processing unit (CPU) or a general-purpose or special-purpose programmable microprocessor, digital signal processor (DSP), programmable controller, application-specific integrated circuit (ASIC), or other similar devices or a combination of the above devices, but the invention is not limited thereto.

For example, in the embodiment, the projection device 10 has a first night vision mode and a second night vision mode. In a situation where the projected image is of a normal size, the first night vision mode may be adopted. In the first night vision mode, the plurality of first IR light-emitting elements 220 are turned on and the plurality of second IR light-emitting elements 230 are turned off, so as to achieve the effect of high optical quality by an IR light beam with a wavelength of 700 nm to 780 nm. Moreover, in a situation where the projected image is of a large size, the second night vision mode may be adopted. In the second night vision mode, the plurality of first IR light-emitting elements 220 and the plurality of second IR light-emitting elements 230 are turned on, and the effect of high luminous intensity is achieved by an IR light beam with a wavelength of 780 nm to 1000 nm and an IR light beam with a wavelength of 700 nm to 780 nm. In particular, the first night vision mode and the second night vision mode are, for example, night vision goggles (NVG) simulation projection modes, but the two modes need different projection screen sizes and different optical requirements.

Moreover, please refer further to FIG. 1, FIG. 2, and FIG. 3. In the embodiment, the processing element 150 is electrically connected to the sensing element 160, and the sensing element 160 is used to receive at least one of the visible image light beam LI and the IR image light beam LR reflected by the projection target to obtain a sensing result and transmit the sensing result to the processing element 150. In the embodiment, the projection device 10 includes, for example, a processing element 150 and a sensing element 160, that is, the processing element 150 and the sensing element 160 are disposed inside the projection device 10, for example. In other embodiments, the processing element 150 and the sensing element 160 are, for example, disposed outside the casing of the projection device or connected (plugged) from the outside of the projection device for operation. Moreover, in other embodiments, the processing element 150 is disposed inside the projection device 10, for example, and the sensing element 160 is disposed outside the casing of the projection device or connected (plugged) from the outside of the projection device for operation. The processing element 150 is electrically connected to the visible light source module 110 and the IR light source module 200 for controlling the switch of the light source module and turning on or off the plurality of first IR light-emitting elements 220 according to the sensing result. The projection device 10 has a first correction mode and a second correction mode for correcting the projected image via the sensing element 160. In the first correction mode, the processing element 150 turns off the visible light source module 110, the plurality of first IR light-emitting elements 220, and the plurality of second IR light-emitting elements 230, wherein, for example, the IR image light beams corresponding to the first light beam L1 and the second light beam L2 may form a corrected image on the projection target, so that the first light beam L1 and the second light beam L2 are turned on in order for the sensing element 160 to capture the corrected image, so as to improve the sensing effect of the camera module. In the second correction mode, the processing element 150 turns on the visible light source module 110 and the plurality of second IR light-emitting elements 230, and turns off the plurality of first IR light-emitting elements 220, wherein for example, the IR image light beams corresponding to the first light beam L1 and the second light beam L2 may form a corrected image on the projection target, so that the sensor element 160 may capture the corrected image, and the visible image light beam LI corresponding to the illumination light beam LB may also be presented on the projection target at the same time, so that the correction may be performed while displaying the projection screen. Moreover, by turning off the first light beam L1 closer to the wavelength of visible light, the color quality of visible light is improved, and the sensing element 160 has a certain sensing effect at the same time. In this way, good optical effects may be obtained in different situations without subsequent optimization processing, and the effect of real-time monitoring and adjustment of optical quality may be further achieved. At the same time, since the two different IR lights may share the optical element, the volume and the manufacturing cost may also be reduced. In the embodiment, the processing element 150 and the sensing element 160 are disposed inside the projection device 10, for example. In other embodiments, the processing element 150 and the sensing element 160 are, for example, disposed outside the casing of the projection device or connected (plugged) from the outside of the projection device to control the two light source modules and to perform the above operation. Moreover, in other embodiments, the processing element 150 is disposed inside the projection device 10, for example, and the sensing element 160 is disposed outside the casing of the projection device or connected (plugged) from the outside of the projection device to perform the above operation.

Based on the above, in the IR light source module and the projection device of the invention, the IR light source module includes the at least one circuit substrate, the plurality of first IR light-emitting elements, and the plurality of second IR light-emitting elements used to provide the first light beam and the second light beam with different wavelengths. In particular, the wavelength of the first light beam is greater than or equal to 700 nm and less than or equal to 780 nm, and the wavelength of the second light beam is greater than 780 nm and less than or equal to 1000 nm. In this way, IR light of different wavelengths may be selectively turned on in different situations to match different projection modes, thereby improving the good optical effect.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the invention" or the like does not necessarily limit the claim scope to a specific embodiment, and the reference to particularly preferred exemplary embodiments of the invention does not imply a limitation on the invention, and no such limitation is to be inferred. The invention is limited only by the scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the invention as defined by the following claims. Moreover, no element and component in the disclosure is intended to be dedicated to the public regardless of whether the element or component is explicitly recited in the following claims.

## Claims

1. An infrared (IR) light source module, for providing an IR light beam (IR), comprising:
at least one circuit substrate (210);
a plurality of first IR light-emitting elements (220) disposed on the at least one circuit substrate (210), and the plurality of first IR light-emitting elements (220) are used to provide a first light beam (L 1); and
a plurality of second IR light-emitting elements (230) disposed on the at least one circuit substrate (220), the plurality of second IR light-emitting elements (230) are used to provide a second light beam (L2), and the IR light beam (IR) comprises at least one of the first light beam (L1) and the second light beam (L2), wherein a wavelength of the first light beam (L1) is greater than or equal to 700 nm and less than or equal to 780 nm, and a wavelength of the second light beam (L2) is greater than or equal to 780 nm and less than or equal to 1000 nm.

2. The IR light source module of claim 1, wherein a number of the at least one circuit substrate (210) is two, and the plurality of first IR light-emitting elements (220) are disposed in one of the at least one circuit substrate (210), and the plurality of second IR light-emitting elements (230) are disposed in the other one of the at least one circuit substrate (210).

3. The IR light source module of claim 1 or 2, wherein the plurality of first IR light-emitting elements (220) are IR light-emitting diodes or IR laser diodes, and the plurality of second IR light-emitting elements (230) are IR laser diodes or IR light-emitting diodes.

4. The IR light source module of any one of the preceding claims, wherein a wavelength of the first light beam (L1) is 730 nm or 740 nm and/or a wavelength of the second light beam (L2) is 808 nm.

5. The IR light source module of any one of the preceding claims, wherein the plurality of first IR light-emitting elements (220) and the plurality of second IR light-emitting elements (230) are alternately arranged on the at least one circuit substrate (210).

6. The IR light source module of any one of the preceding claims, wherein a number of the plurality of first IR light-emitting elements (220) is greater than or equal to a number of the plurality of second IR light-emitting elements (230).

7. The IR light source module of any one of the preceding claims, further comprising:
a plurality of first collimating lenses (240) disposed on a light-emitting side of the plurality of first IR light-emitting elements (220); and
a plurality of second collimating lenses (250) disposed on a light-emitting side of the plurality of second IR light-emitting elements (230), wherein optical conditions of the plurality of first collimating lenses (220) are different from optical conditions of the plurality of second collimating lenses (230).

8. A projection device (10), comprising:
an illumination system (100) for providing at least one of an illumination light beam (LB) and an IR light beam (IR), the illumination system (100) comprising:
a visible light source module (110) for providing the illumination light beam (LB); and
an IR light source module (200) as claimed in any one of the preceding claims,
at least one light valve (60) disposed on a transmission path of the illumination light beam (LB) and the IR light beam (IR) and used for converting the illumination light beam (LB) into a visible image light beam (LI) and converting the IR light beam (IR) into an IR image light beam (LR); and
a projection lens (70) disposed on the transmission path of the visible image light beam (LI) and the IR image light beam (LR), and used for projecting at least one of the visible image light beam (LI) and the IR image light beam (LR) out of the projection device (10).

9. The projection device of claim 8, wherein the illumination system (100) further comprises a focusing element (120) disposed on a transmission path of the first light beam (L1) and the second light beam (L2).

10. The projection device of claim 8 or 9, wherein the illumination system (100) further comprises a light splitting element (130), and the light splitting element (130) is disposed on the transmission path of the illumination light beam (LB) and the IR light beam (IR) for reflecting at least one of the illumination light beam (LB) and the IR light beam (IR) and allowing the other one of the illumination light beam (LB) and the IR light beam (LR) to pass through; and/or the light splitting element (130) is used for reflecting one of the first light beam (L1) and the second light beam (L2) and allowing the other one of the first light beam (L1) and the second light beam (l2) to pass through.

11. The projection device of any one of the preceding claims 8-10, wherein the illumination system (100) further comprises a light homogenizing element (140) disposed on the transmission path of the illumination light beam (LB) and the IR light beam (IR).

12. The projection device of any one of the preceding claims 8-11, wherein the visible light source module (110) and the IR light source module (200) are turned on and off in an alternating sequence; and/or a turn-on time interval of the visible light source module (100) is equal to a turn-on time interval of the IR light source module (200).

13. The projection device of any one of the preceding claims 8-12, further comprising a processing element (150) electrically connected to the visible light source module (110) and the IR light source module (200), and used for controlling a luminous intensity of the illumination light beam (LB) and the IR light beam (IR) and/or the projection device (150) has a first night vision mode and a second night vision mode, in the first night vision mode, the processing element (150 is configured to turn on the plurality of first IR light-emitting elements (220) and to turn off the plurality of second IR light-emitting elements (230), and in the second night vision mode, the processing element (150) is configured to turn on the plurality of first IR light-emitting elements (220) and the plurality of second IR light-emitting elements (230).

14. The projection device of claim 13, wherein the projection device (150) has a first correction mode and a second correction mode, and in the first correction mode, the processing element (150) is configured to turn on the visible light source module (110), the plurality of first IR light-emitting elements (220), and the plurality of second IR light-emitting elements (230), and in the second correction mode, the processing element (150) is configured to turn on the visible light source module (110) and the plurality of second IR light-emitting elements (230), and to turn off the plurality of first IR light-emitting elements (220).

15. The projection device of claim 13 or 14, further comprising: a sensing element (160) electrically connected to the processing element (150), receiving at least one of the visible image light beam (LI) reflected by a projection target and the IR image light beam (LR) to obtain a sensing result, and the processing element (150) is configured to turn on or off the plurality of first IR light-emitting elements (220) according to the sensing result and/or the plurality of first IR light-emitting elements (220) and the plurality of second IR light-emitting elements (230) of the IR light source module (110) are alternately arranged on the at least one circuit substrate (210), and/or the visible light source module (110) comprises a red laser diode, a green laser diode, and a blue laser diode.
